# EUROPÄISCHE PATENTSCHRIFT

(11) **EP 2 931 544 B1**
(45) Veröffentlichungstag und Bekanntmachung des Hinweises auf die Patenterteilung: **26.04.2017**
(21) Anmeldenummer: 13802320.5
(22) Anmeldetag: 03.12.2013
(51) Int. Cl.: B60K 1/00

(54) **ÜBERSETZUNGS- UND AUSGLEICHSGETRIEBE SOWIE MOTOR- UND GETRIEBEEINHEIT**
TRANSMISSION AND DIFFERENTIAL GEARING AND ENGINE AND GEARING UNIT
TRAIN MULTIPLICATEUR ET DIFFÉRENTIEL, ET ENSEMBLE MOTEUR ET ENTRAÎNEMENT

(30) Priorität: 17.12.2012 DE 102012024751
(43) Veröffentlichungstag der Anmeldung: 21.10.2015
(73) Patentinhaber: VOLKSWAGEN AKTIENGESELLSCHAFT, 38440 Wolfsburg (DE)
(72) Erfinder: PETERSEN, Rainer, 38444 Wolfsburg (DE); MÖCKEL, Jörg, 38524 Sassenburg (DE); LUTZ, Andreas, 38104 Braunschweig (DE); HANKE, Stefan, 38126 Braunschweig (DE)
(86) Internationale Anmeldenummer: PCT/EP2013/075373
(87) Internationale Veröffentlichungsnummer: WO 2014/095345

(56) Entgegenhaltungen:
- EP-A1- 2 511 570
- WO-A1-2012/079751
- WO-A1-2013/186168
- DE-A1-102010 031 744
- DE-A1-102011 007 259

## Beschreibung

Die Erfindung betrifft ein Übersetzungs- und Ausgleichsgetriebe mit einem Gehäuse, mit einer Eingangswelle und zwei koaxial zu der Eingangswelle angeordneten Ausgangswellen, wobei ein Übersetzungsabschnitt und ein Ausgleichsabschnitt vorgesehen sind, wobei der Übersetzungsabschnitt zwei Planetenstufen aufweist, nämlich eine Eingangsstufe und eine Laststufe aufweist, wobei das Sonnenrad der Eingangsstufe mit der Eingangswelle wirksam verbunden ist, wobei die Laststufe ein gehäusefestes Hohlrad aufweist und deren Sonnenrad über einen Steg mit mindestens einem Planetenrad der Eingangsstufe wirksam verbindbar bzw. verbunden ist und wobei mindestens ein Planetenrad der Laststufe über einen Steg wirksam mit einer Eingangswelle des Ausgleichsabschnitt verbunden ist. Weiterhin betrifft die Erfindung eine Motor- und Getriebeeinheit mit einem Elektromotor und einem koaxial an den Elektromotor angeflanschten, zuvor genannten Übersetzungs- und Ausgleichsgetriebe.

Übliche Bauformen von Getrieben in Elektro-Fahrzeugen (E-Fahrzeugen) sind an die herkömmlichen Getriebe für die Kopplung mit Verbrennungskraftmotoren angelehnt. Diese Getriebe weisen einen Achsversatz zwischen Eingangs- und Ausgangswelle, also zwischen der Rotorwelle des Elektromotors (E-Motor) und den Radwellen auf. Die Flanschwellen zu den Rädern werden im Wesentlichen achsparallel zu den Antriebsmaschinen (E-Motor bzw. Verbrennungsmotor) an diesen entsprechend vorbei geführt. Eine Abkopplung der Antriebsmaschine erfolgt hier meist auf die klassische Weise, nämlich durch eine direkt hinter dem E-Motor angeordnete reibschlüssige Kupplung. Diese Ausführung der Abkopplungsvorrichtung wird bspw. in der DE 10 2007 043 016 A1 beschrieben.

Für viele elektrische Fahrzeuganwendungen bzw. Hybrid-Antriebe reicht es aus, den E-Motor mit nur einer festen Getriebeübersetzung an die Räder zu binden bzw. mit den Rädern wirksam zu verbinden. Der E-Motor stellt vom Stillstand des Fahrzeugs/Kraftfahrzeugs an ein hohes Drehmoment zur Verfügung und erspart damit das in den herkömmlichen Antriebssträngen (mit Verbrennungsmotoren) erforderliche Anfahrelement. Das Getriebe wandelt das Drehmoment des E-Motors, so dass das Fahrzeug an seiner Haftgrenze anfahren kann. In einigen Fahrzeuganwendungen reicht die dadurch festgelegte Getriebeübersetzung aber nicht aus, um bei maximaler E-Motordrehzahl die gewünschte Fahrzeugendgeschwindigkeit auch zu erreichen. Hier muss dann eine weitere Getriebeübersetzung in diesen Fällen dafür sorgen, dass mit dem Elektroantrieb, also mit dem E-Motor neben der geforderten "Anfahrperformance" auch die - im Endeffekt - gewünschte Endgeschwindigkeit des Kraftfahrzeugs realisierbar wird. Bisher sind allerdings "Zweiganggetriebe" für reine Elektrofahrzeuge von den Getriebeherstellern nur in der oben beschriebenen achsparallelen Bauweise realisiert worden.

So sind auch koaxial zum Elektromotor aufgebaute Getriebe bekannt, die einen Übersetzungsabschnitt mit zwei Planetenstufen (Planetengetriebe) aufweisen. Hierbei weist der Übersetzungsabschnitt separate koaxial hintereinander geschaltete Planetengetriebe auf, wobei das so aufgebaute Getriebe nur geringen radialen und axialen Bauraum benötigt und das Getriebe insbesondere aber problemlos die erforderliche Gesamtübersetzung realisiert. Derzeit werden unterschiedliche Ausführungsformen dieses Getriebes entwickelt und weiterentwickelt, so ist bspw. eine Kupplungsvorrichtung bekannt, die den Elektromotor vom Antriebsstrang eines derartigen Getriebes abkoppelt, wobei die Abkopplungsvorrichtung elektromechanisch betätigt wird und im wesentlichen "bauraumneutral" in die das Getriebe integrierbar ist.

Im Stand der Technik sind aber noch andere Hybridantriebssysteme für Kraftfahrzeuge bekannt. So ist aus der DE 44 31 929 C1 ein Getriebe bekannt, das die Anfahrfähigkeit eines Kraftfahrzeuges dadurch verbessert, weil zwischen dem Antriebsritzel und einem weiteren Zahnrad auf der Zwischenwelle ein separates Reduktionsgetriebe, bspw. ein Planetengetriebe angeordnet ist.

Weiterhin ist aus der EP 0 536 230 B1 ein Getriebe für ein Kraftfahrzeug bekannt, das teilweise als Planetengetriebe ausgebildet ist, wobei mit Hilfe von Kopplungsvorrichtungen, insbesondere von Schiebemuffen das Hohlrad des Planetengetriebes mit unterschiedlichen Komponenten koppelbar ist.

Weiterhin ist aus der DE 32 30 121 A1 ein Hybridantriebssystem für Fahrzeuge bekannt, bei dem dann um eine besonders wirkungsvolle und effektive Funktion eines derartigen Antriebssystems zu erreichen, die schwungradlos ausgeführte Kurbelwelle des Hubkolben-Verbrennungsmotors über eine erste Kupplung direkt mit dem als Schwungmasse für den Antriebsmotor geltenden Rotor des Elektromotors und dieser über eine weitere Kupplung mit der Eingangswelle des Getriebes verbunden bzw. verbindbar ist. Der konstruktive Aufwand ist hier allerdings sehr groß.

Schließlich ist ein Getriebe für Kraftfahrzeuge aus der DE 199 03 936 A1 bekannt, das zwei Planetengetriebe aufweist, die jeweils mit einer Getriebewelle gekoppelt sind, auf denen Eingangszahnräder für verschiedene Getriebeübersetzungen angeordnet sind. Die hier angeordneten Planetengetriebe sind in einer gleichen Ebene angeordnet, wobei jedes Planetengetriebe mit einer separaten Elektromaschine gekoppelt werden soll. Auch hier ist der konstruktive Aufwand, insbesondere mit zwei vorzusehenden E-Motoren sehr groß. Weiterhin ist aus der DE 100 01 602 A1 ein Getriebe bekannt, bei dem ein Planetensatz bzw. ein Planetengetriebe verwendet wird, um die Zahl der zu realisierenden Gänge zu verdoppeln, sowie aus der DE 197 23 776 A1 ein elektrischer Einzelradantrieb für ein Fahrzeug bekannt ist, der einen großen Geschwindigkeitsbereich des Fahrzeuges realisieren soll, wobei zwischen dem Elektromotor und dem Endantriebsgetriebe ein Übertragungsgetriebe angeordnet ist, das zwischen wenigstens zwei Drehzahlübertragungsstufen umschalten kann.

Schließlich ist aus der gattungsbildenden EP 2 511 570 A1 ein Getriebe bekannt, mit einem Übersetzungsabschnitt, der zwei Planetenstufen aufweist, nämlich eine Eingangsstufe und eine Laststufe aufweist. Das Sonnenrad der Eingangsstufe ist mit der Eingangswelle wirksam verbunden. Die Laststufe weist ein gehäusefestes Hohlrad auf und deren Sonnenrad ist über einen Steg mit den Planetenrädern der Eingangsstufe verbunden. Die Planetenräder der Laststufe sind über einen Steg mit einem Differential verbunden. Weiterhin sind zwei hydraulisch betätigte, separat angesteuerte Reibkupplungen vorhanden, die das Hohlrad der Eingangsstufe mit einem Planetenträger der Eingangsstufe und mit dem Gehäuse verbinden können.

Problematisch bei den im Stand der Technik bekannten Hybridantrieben bzw. den hierfür eingesetzten Getrieben ist, dass der Konstruktionsaufwand und der hierfür notwendige Bauraum sehr groß ist. Dies gilt insbesondere dann, wenn um einen hohen Fahrzeugsgeschwindigkeitsbereich eines Kraftfahrzeuges abzudecken, das Getriebe "zweigängig" ausgeführt werden soll, also mindestens zwei Gänge bzw. zwei Gangstufen mit dem entsprechenden Getriebe realisiert werden sollen. Die hierfür vorgesehenen Schaltvorrichtungen und deren Anordnung bzw. Komponenten benötigen einen sehr hohen Bauraum bei den bisher bekannten Getrieben.

Der Erfindung liegt daher die Aufgabe zugrunde, das eingangs genannte Übersetzungs- und Ausgleichsgetriebe so auszugestalten und weiterzubilden, dass mit Hilfe des Getriebes einerseits zwei Gangstufen realisierbar sind, andererseits eine Vergrößerung des Bauraumbedarfs des Getriebes im wesentlichen vermieden ist, wobei zugleich die Einsatzflexibilität und der Wirkungsgrad des Getriebes verbessert sind.

Die zuvor aufgezeigte Aufgabe wird nun dadurch gelöst, dass über eine entsprechend vorgesehene und/oder angeordnete Kopplungsvorrichtung das Hohlrad der Eingangsstufe wirksam und drehfest mit einem Planetenträger des Planetenrades der Eingangsstufe oder mit einem Planetenträger des Planetenrades der Laststufe koppelbar bzw. entkoppelbar ist.

Durch die insbesondere formschlüssig ausgebildete Kopplungsvorrichtung und deren jeweilige Komponenten, kann diese insbesondere "bauraumneutral" in das Getriebe integriert werden. Hierfür können entsprechend bereits vorhandene Flanschlagen und/oder bereits vorhandene Gehäuseflächen genutzt werden, sowie auch bereits bestehende Verzahnungen der Eingangswelle und/oder anderer Wellen mitgenutzt werden. Das Umschalten der ersten Gangstufe zur zweiten Gangstufe des Getriebes kann im Wesentlichen lastfrei erfolgen, weil die Relativdrehzahlen vom Antriebsmotor synchronisiert werden können. Die Abkopplung erfolgt in der Schaltstellung "neutral" der Kopplungsvorrichtung. Zusätzlich ist zum Abschleppen des Fahrzeuges auch die Möglichkeit der "manuellen" Abkopplung gegeben bzw. realisiert (mechanisch oder elektrisch). Wie die folgenden Ausführungen noch ausführlicher darlegen werden weist das erfindungsgemäße Übersetzungs- und Ausgleichsgetriebe zwei hintereinander geschaltete Planetenstufen (Planetengetriebe), nämlich eine Eingangs- und Laststufe auf. Diese beiden Planetenstufen sind durch entsprechende Bindungen (Stege) miteinander fest gekoppelt und realisieren so das gewünschte Übersetzungsverhältnis. Weitere Übersetzungen, nämlich eine erste und zweite Gangstufe können generiert werden, wenn diese Bindungen aufgelöst bzw. geändert werden, nämlich mit der zuvor erwähnten Kopplungsvorrichtung. Auf diese Weise können dann mehrere, hier vzw. zwei Gangstufen realisiert werden, ohne dass weitere Zahnradstufen integriert werden müssen. Den für Elektroantriebe im Allgemeinen geforderten großen Übersetzungssprung zwischen den zwei Gangstufen erreicht man insbesondere dann, wenn eine Planetenstufe komplett kurzgeschlossen wird (verblockt umläuft). Dies sollte vzw. im höheren Gang, also bei der Realisierung der zweiten Gangstufe der Fall sein, da hier im Allgemeinen längere Verweildauern auftreten. Bei der hier realisierten bevorzugten Ausführungsform ist nun die erste Gangstufe dadurch realisiert, dass die Kopplungsvorrichtung das Hohlrad der Eingangsstufe mit einem Planetenträger des Planetenrades der Laststufe wirksam und drehfest koppelt, wobei die zweite Gangstufe dadurch realisiert ist, dass die Kopplungsvorrichtung das Hohlrad der Eingangsstufe mit einem Planetenträger des Planetenrades bzw. mit dem Planetensatz der Eingangsstufe wirksam und drehfest koppelt. Dies darf im folgenden ausführlich erläutert werden, insbesondere sind die eingangs genannten Nachteile vermieden und entsprechende Vorteile erzielt, wobei zusätzlich noch eine Abkopplung des E-Motors für einen energetisch günstigen "Segelbetrieb" eines ein-achsig betriebenen Fahrzeuges bzw. zur Effizienzsteigerung eines zwei-achsig betriebenen Fahrzeuges (durch Abkopplung einer Achse im Teillastbetrieb) genutzt werden kann. Das Ausgleichsabschnitt kann vorteilhaft als Stirnraddifferential ausgebildet sein, insbesondere als ein Doppelplanetenradsatz, bei dem der Steg als die Eingangswelle dient und jede Sonne mit einer Ausgangswelle verbunden ist. In einer ganz vorteilhaften Variante können die die Planeten der Laststufe tragende Bolzen gemeinsam mit den Bolzen, die die erste Gruppe den Planeten des Stirnraddifferentials tragen, sein. Im Ergebnis sind die Einsatzmöglichkeiten des erfindungsgemäßen Getriebes erhöht, wobei der Bauraum entsprechend minimiert ist.

Es gibt nun eine Vielzahl von Möglichkeiten das erfindungsgemäße Übersetzungs- und Ausgleichsgetriebe in vorteilhafter Art und Weise auszugestalten und weiterzubilden, hierfür darf zunächst auf die dem Patentanspruch 1 nachgeordneten Patentansprüche verwiesen werden. Im Folgenden darf nun die bevorzugte Ausführungsform der Erfindung anhand der nachfolgenden Beschreibung und der dazugehörenden Zeichnungen näher erläutert werden.

In der Zeichnung zeigt
- Fig. 1: eine schematische Darstellung einer Antriebseinheit eines Kraftfahrzeuges mit der erfindungsgemäßen Motor- und Getriebeeinheit mit der Darstellung der Positionierung der Kopplungsvorrichtung in ihrer Neutralstellung.
- Fig. 2: eine schematische Darstellung einer Antriebseinheit eines Kraftfahrzeuges mit der erfindungsgemäßen Motor- und Getriebeeinheit mit der Darstellung der Positionierung der Kopplungsvorrichtung zur Realisierung der ersten Gangstufe, nämlich mit der Kopplung des entsprechenden Hohlrades mit dem Planetenträger der Laststufe,
- Fig. 3: in schematischer Darstellung eine Antriebseinheit eines Kraftfahrzeuges mit der erfindungsgemäßen Motor- und Getriebeeinheit mit der Darstellung der Positionierung der Kopplungsvorrichtung zur Realisierung der zweiten Gangstufe, nämlich mit Kopplung des entsprechenden Hohlrades mit dem Planetenträger des Planetenrades der Eingangsstufe,
- Fig. 4: in schematischer, teils geschnittener Darstellung die wesentlichen Komponenten des Getriebes mit der Kopplungsvorrichtung in der Neutralstellung,
- Fig. 5: in schematischer, teils geschnittener Darstellung die Komponenten aus Fig. 4 mit der Kopplungsvorrichtung, wobei das Hohlrad der Eingangsstufe mit dem Planetenträger der Laststufe wirksam gekoppelt ist,
- Fig. 6: im Wesentlichen die in den Fig. 4 und 5 dargestellten Komponenten, in schematischer Darstellung mit der Kopplungsvorrichtung, wobei das Hohlrad der Eingangsstufe mit dem Planetenträger des Planetenrades der Eingangsstufe gekoppelt ist, und
- Fig. 7: die wesentlichen Komponenten der Kopplungsvorrichtung, nämlich die Schiebemuffe bzw. den Koppelring sowie die Schaltgabel und weitere Komponenten in schematischer leicht perspektivischer Darstellung.

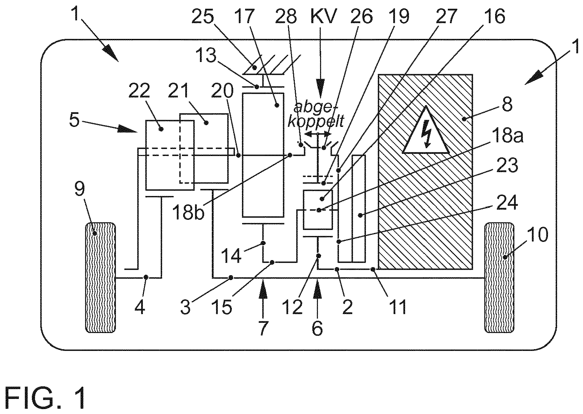

Die Fig. 1 bis 3 zeigen zunächst in schematischer Darstellung ein Übersetzungs- und Ausgleichsgetriebe 1, für ein Fahrzeug, insbesondere für ein hier nicht im Einzelnen dargestelltes Kraftfahrzeug, wobei auch das Gehäuse 25 des Übersetzungs- und Ausgleichsgetriebes 1 nur schematisch angedeutet ist.
Das Übersetzungs- und Ausgleichsgetriebe 1 weist eine Eingangswelle 2 und zwei koaxial zu der Eingangswelle 2 angeordnete Ausgangswellen 3 und 4 auf. Das Übersetzungs- und Ausgleichsgetriebe 1 weist einen Übersetzungsabschnitt und einen als Stirnraddifferential 5 ausgebildeten Ausgleichsabschnitt auf. Der hier nicht näher bezeichnete Übersetzungsabschnitt weist zwei Planetenstufen (insbesondere zwei axial hintereinander geschaltete Planetengetriebe) nämlich eine Eingangsstufe 6 und eine Laststufe 7 auf.

In der in den Fig. 1 bis 3 gezeigten üblichen "Halbdarstellung" sind die entsprechenden Elemente des Übersetzungs- und Ausgleichsgetriebes 1 gut erkennbar. In den Fig. 1 bis 3 ist daher nur die "obere Hälfte" der an sich rotationssymetrischen Vorrichtung, nämlich der wesentlichen rotierenden Komponenten des Übersetzungs- und Ausgleichgetriebes 1 schematisch dargestellt. Die hier dargestellte Antriebseinheit, nämlich das hier dargestellte Übersetzungs- und Ausgleichsgetriebe 1 dient der Übertragung eines von einem Antriebsmotor, insbesondere eines Elektromotors 8 erzeugten Drehmomentes auf die Antriebsräder, auf die Räder 9 und 10 einer angetriebenen Achse eines Kraftfahrzeuges.

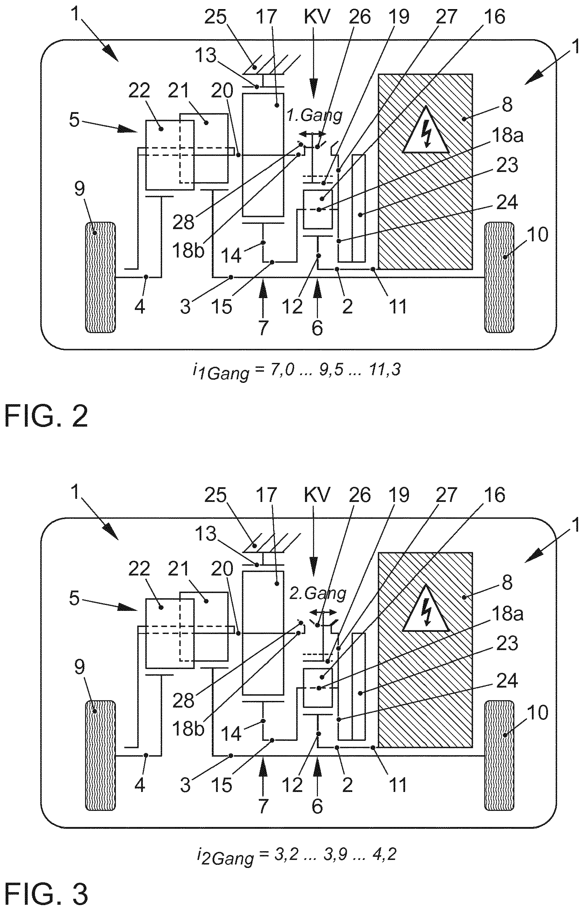

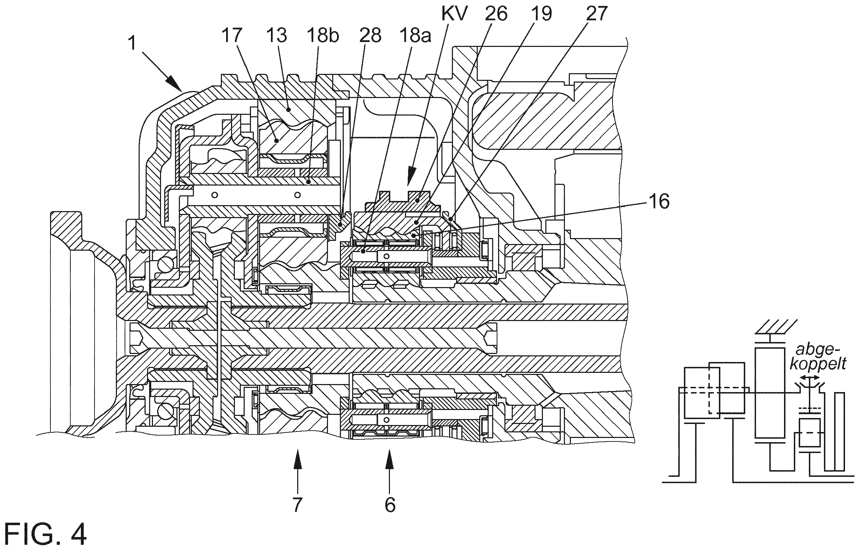

Die Fig. 1 bis 3 zeigen nun schematisch die wesentlichen Komponenten des Übersetzungs-und Ausgleichsgetriebes 1, wobei die Positionierung der Kopplungsvorrichtung KV, auf die im Folgenden noch näher eingegangen wird, nämlich die Positionierung der Kopplungsvorrichtung KV in Fig. 1 bzw. in Fig. 2 und in Fig. 3 schematisch dargestellt ist. Die Positionierung und auch die Ausbildung der hier dargestellten Kopplungsvorrichtung KV wird aber im Folgenden, insbesondere anhand der Fig. 4 bis 6 nochmals ausführlich erläutert werden. Zuvor darf auf weiteren Komponenten des hier dargestellten Übersetzung-und Ausgleichsgetriebes 1 noch näher eingegangen bzw. diese im Folgenden noch näher erläutert werden:

Das bei der Übertragung des Drehmomentes vom Antriebsmotor, hier vom Elektromotor 8 auf die Räder 9 und 10 dienende Übersetzungs- und Ausgleichsgetriebe 1 setzt sich im wesentlichen aus drei funktionalen Gruppen zusammen. Es sind dies die Eingangsstufe 6, die Laststufe 7 und eine Ausgleichsstufe bzw. ein Ausgleichsabschnitt, der hier auch als Stirnraddifferential 5 bezeichnet werden kann bzw. entsprechend ausgebildet ist. Die einzelnen Stufen 6, 7 und 5 sind in der aufgezählten Reihenfolge benachbart und kompakt nebeneinander bzw. axial benachbart zueinander angeordnet.

Der Antriebsmotor, hier der Elektromotor 8 weist eine Ausgangswelle 11 auf, die konzentrisch zu dessen nicht näher dargestellten Wicklungen angeordnet ist, insbesondere als Hohlwelle ausgebildet ist. An diese Ausgangswelle 11 schließt sich die ebenfalls als Hohlwelle ausgebildete Eingangswelle 2 des Übersetzungs- und Ausgleichsgetriebes 1 an, beide Komponenten können aber auch als ein integrales Bauteil ausgebildet sein. Der Übersetzungsabschnitt weist - wie bereits erwähnt - zwei Planetenstufen auf, nämlich die Eingangsstufe 6 und die Laststufe 7. Das Sonnenrad 12 der Eingangsstufe 6 ist mit der Eingangswelle 2 wirksam verbunden, wobei die Laststufe 7 ein gehäusefestes Hohlrad 13 aufweist und das Sonnenrad 14 der Laststufe 7 über einen Steg 15 mit mindestens einem Planetenträger 18a des Planetenrades 16, insbesondere mit dem Planetensatz der Eingangsstufe 6 wirksam verbindbar bzw. verbunden ist. Hierbei können der Steg 15 und der Planetenträger 18a als separate Bauteile oder als integrierte Bauteile bzw. als integrales Bauteil ausgebildet sein, je nach Ausführungsform. Schließlich ist mindestens ein Planetenrad 17 der Laststufe 7 bzw. der Planetensatz über einen Steg 20 bzw. über den Planetenträger 18b wirksam mit einer Eingangswelle des Stirnraddifferentials 5 verbunden.

Aus den vorstehenden Erläuterungen ergibt sich, dass die Eingangsstufe 6 ein Sonnenrad 12, einen Planetensatz, insbesondere mindestens ein Planetenrad 16, vorzugsweise mehrere

Planetenräder 16, sowie einen - nun erwähntes - Hohlrad 19 aufweist, wobei die Laststufe 7 ein Sonnenrad 14, ein Planetensatz, insbesondere zumindest ein Planetenrad 17, vorzugsweise mehrere Planetenräder 17 und ein Hohlrad 13 aufweist, so wie dies aus den Fig. 1 bis 3 ersichtlich ist.

Die Eingangsstufe 6 und Laststufe 7 bilden gemeinsam den Übersetzungsabschnitt des Übersetzungs- und Ausgleichsgetriebes 1 mit einer entsprechenden Gesamtübersetzung.

Als Ausgangselement des Übersetzungsabschnitts dient der Steg 20 der Laststufe 7. Über diesen Steg 20 ist der Übersetzungsabschnitt mit dem Stirnraddifferential 5 wirksam verbunden, insbesondere hier mit einem doppelten Satz von Planetenrädern 21 und 22 verbunden, die miteinander kämmen. Über die übliche bekannte Anordnung des Stirnraddifferentials 5 übertragen die Planetenräder 21 und 22 die entsprechende Rotation auf die jeweilige Ausgangswelle 3 bzw. 4 des Übersetzungs- und Ausgleichsgetriebes 1. Hierbei können der Planetenträger 18b und der Steg 20 als integrales Bauteil ausgebildet sein.

Wie aus den Fig. 1 bis 3 ersichtlich ist, ist zusätzlich noch ein Parksperrenrad 23 vorgesehen, zur Realisierung einer Parksperre, wobei das Parksperrenrad 23 über einen entsprechenden Steg 24 (bzw. eine Parksperrenwelle) mit dem Planetenrad 16 bzw. dem entsprechenden Planetensatz der Eingangsstufe 6 verbunden ist und mit einer im Gehäuse 25 vorgesehenen Parksperrenvorrichtung in Eingriff steht.

Grundsätzlich gilt, damit ein entsprechendes Drehmoment über eine Planetenstufe übertragen werden kann, müssen die entsprechenden Komponenten entsprechend wirksam verbunden sein, d. h. die freie Rotation bspw. eines Sonnenrades oder eines Hohlrades würde zu einer Entkopplung der entsprechenden Planetenstufe führen, so dass kein Drehmoment mehr übertragen werden kann.

Die eingangs genannten Nachteile sind nun dadurch vermieden, dass über eine entsprechend vorgesehene und/oder angeordnete Kopplungsvorrichtung KV das Hohlrad 19 der Eingangsstufe 6 wirksam und drehfest mit einem Planetenträger 18a des Planetenrades 16 bzw. mit dem Planetensatz der Eingangsstufe 6 oder mit einem Planetenträger 18b des Planetenrades 17 der Laststufe 7 koppelbar bzw. hiervon entkoppelbar ist. Mit diesen zuvor beschriebenen Alternativen werden dann die erste und zweite Gangstufe realisiert.

Die Fig. 1 zeigt die Kopplungsvorrichtung KV in ihrer Neutralstellung, die Fig. 2 zeigt die Kopplungsvorrichtung KV, wobei das Hohlrad 19 der Eingangsstufe 6 mit dem Planetenträger 18b der Laststufe 7 gekoppelt ist und die Fig. 3 zeigt die Kopplungsvorrichtung KV in der Positionierung, wo das Hohlrad 19 der Eingangsstufe 6 mit dem Planetenträger 18a des Planetenrades 16 bzw. mit dem Planetensatz der Eingangsstufe 6 wirksam gekoppelt ist. Im letzteren Fall läuft die Eingangsstufe 6 "als Block" um und realisiert so die weitere, zweite Gangstufe des Übersetzungs- und Ausgleichsgetriebes 1. Dies bedeutet, für den Fall, dass das Hohlrad 19 der Eingangsstufe 6 mit dem Planetenträger 18b der Laststufe 7 wirksam, insbesondere drehfest gekoppelt ist, wird die erste Gangstufe im Übersetzungs- und Ausgleichsgetriebe 1 realisiert, die vzw. ein Übersetzungsverhältnis zwischen 7,0 bis 11,3, insbesondere 9,5 realisiert, wobei die zweite Gangstufe im Getriebe dann realisiert ist, wenn das Hohlrad 19 der Eingangsstufe 6 drehfest mit dem Planetenträger 18a des Planetenrades 16 bzw. mit dem Planetensatz der Eingangsstufe 6 verbunden ist und somit die ganze Stufe "als Block" umläuft, im letzteren Fall ist dann eine Gesamtübersetzung im Getriebe vzw. zwischen 3,2 bis 4,2, insbesondere von 3,9 realisiert.

Zwar zeigen die Fig. 1 bis 3, dass sich die Kopplungsvorrichtung KV bauraumneutral im Übersetzungs- und Ausgleichsgetriebe 1 integrieren lässt, wie nun die konkrete technische Umsetzung/Anordnung der jeweiligen Komponenten realisiert wird, dies wird durch die Fig. 4 bis 6 dargestellt, auf die im Folgenden nun näher eingegangen werden darf:
Zunächst ist die Kopplungsvorrichtung KV so ausgebildet und/oder ausgeführt, dass die Kopplung bzw. die Entkopplung der entsprechenden Elemente über vorgesehene Formschlusselemente realisiert wird, insbesondere daher eine formschlüssige Kopplung realisiert wird. Die Kopplungsvorrichtung KV weist nun einen Koppelring 26, ein Koppelrad 27 und einen Mitnahmering 28 auf (der auch als zweites Koppelrad bezeichenbar ist).

Die Fig. 4 bis 6 zeigen in deutlicher Form die Kopplungsvorrichtung KV mit dem jeweiligen Komponenten, nämlich dem Koppelring 26, dem Koppelrad 27 und dem Mitnahmering 28. Wie die Fig. 4 bis 6 zeigen muss auch bei unterschiedlicher Positionierung der Kopplungsvorrichtung KV, nämlich des Kopplungsringes 6, (der auch als Synchronring bezeichenbar ist), nämlich wenn dieser nach rechts oder nach links verschoben wird, der Bauraum des Getriebes, also des Übersetzungs- und Ausgleichsgetriebes 1 hier nicht vergrößert werden, was insbesondere die bereits eingangs genannten Vorteile mit sich bringt. Da die Kopplungsvorrichtung KV bzw. deren Komponenten so ausgebildet sind, dass die

Kopplung bzw. Entkopplung der entsprechenden Elemente/Komponenten über vorgesehene Formschlusselemente realisiert wird, die keinen unnötig großen Bauraumbedarf einnehmen, können die eingangs beschriebenen Vorteile entsprechend realisiert werden.

Unter Bezugnahme auf die Fig. 4 bis 6 darf nun folgendes ausgeführt werden:
Die Kopplungsvorrichtung KV ist nun so ausgebildet, dass diese zunächst den Koppelring 26 aufweist, der in Axialrichtung verschiebbar ist und mit dem Hohlrad 19 der Eingangsstufe 6 drehfest verbunden ist. Hierzu weist der Innenumfang des Koppelringes 26 eine innere und der Außenumfang des Hohlrades 19 eine äußere Steckverzahnung auf, die miteinander in Eingriff stehen.

Fig. 4 zeigt die Kopplungsvorrichtung KV in ihrer Neutralstellung, hier ist weder der Koppelring 26 mit dem Koppelrad 27 noch mit dem Mitnahmering 28 drehfest verbunden. Da aber der Koppelring 26 axial auf dem Hohlrad 19 verschiebbar angeordnet ist und der Koppelring 26 und das Hohlrad 19 eine miteinander in Eingriff stehende Steckverzahnung aufweisen kann nun mit Hilfe des Koppelringes 26 das Hohlrad 19 drehfest verbunden werden, nämlich entweder mit dem Koppelrad 27 oder mit dem Mitnahmering 28.

Hierbei ist der Mitnahmering 28 wirksam bzw. drehfest mit dem Planetenträger 18b verbunden.

Das Koppelrad 27 ist wirksam mit dem Planetenträger 18a des Planetenrades 16 der Eingangsstufe 6 verbunden, wie aus den Fig. 4 bis 6 ersichtlich.

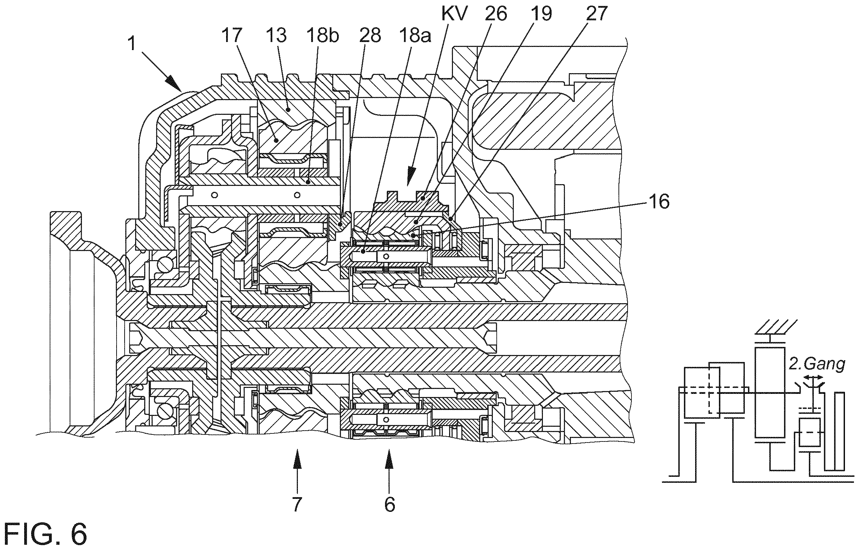

Um nun das Koppelrad 27 wirksam mit dem Planetenträger 18a bzw. mit den Planetenträgern 18a der Planetenträger 16 der Eingangsstufe 6 zu verbinden ist am Außenumfang des Koppelrades 27 eine zu der Steckverzahnung des Koppelringes 26 korrespondierende Verzahnung vorgesehen. Bei einer Verschiebung des Koppelringes 26 nach rechts, so wie in Fig. 6 gezeigt, kommt also die Steckverzahnung am Innenumfang des Koppelringes 26 mit der an dem Außenumfang des Koppelrades 27 vorgesehenen Verzahnung in Eingriff, so dass beide Komponenten drehfest miteinander verbunden sind, und im Endeffekt dann das Hohlrad 19 der Eingangsstufe 6 drehfest mit dem bzw. den Planetenträgern 18a der Planetenräder 16 der Eingangsstufe 6 verbunden ist, so dass für diesen Fall die ganze Planetenstufe "als Block" umläuft und so dann auch die zweite Gangstufe des Getriebes, nämlich des Übersetzungs- und Ausgleichsgetriebes 1 realisiert bzw. eingelegt ist. Die Fig. 6 korrespondiert daher zu der
schematischen Darstellung der Fig. 3. Zur wirksamen Kopplung bzw. Realisierung der zweiten Gangstufe ist daher der Koppelring 26 über das Koppelrad 27 verschiebbar so wie in Fig. 6 dargestellt (nämlich hier nach rechts verschoben).

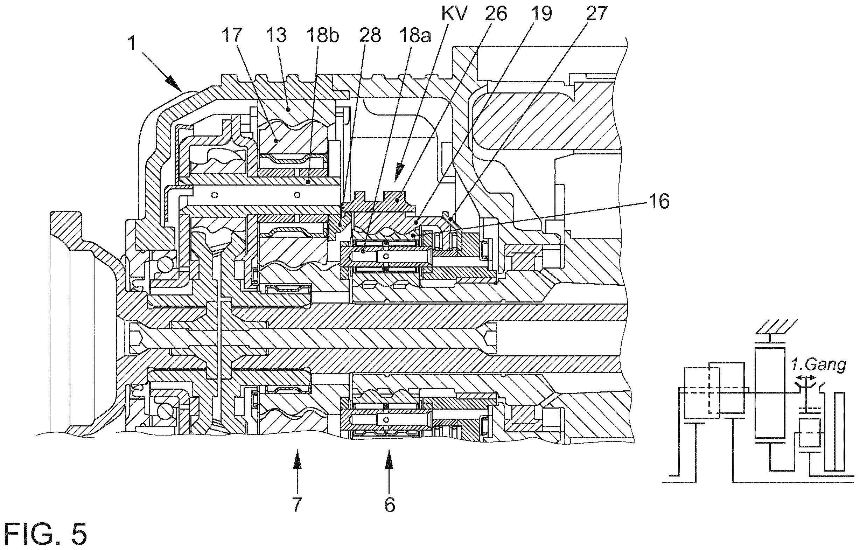

Wie die Fig. 5 zeigt kann der Koppelring 26 auch nach links verschoben werden, für diesen Fall kommt der Koppelring 26 mit dem Mitnahmering 28 in Eingriff. Wie bereits erwähnt ist der Mitnahmering 28 vzw. drehfest an dem Planetenträger 18b der Laststufe 7 angeordnet und/oder befestigt und weist eine hier nicht näher bezeichnete Außenverzahnung auf. Der Koppelring 26 weist eine mit der Verzahnung des Mitnahmeringes 28 in Eingriff bringbare Innenverzahnung auf und ist zur wirksamen Kopplung zumindest teilweise auf den Mitnahmering 28 aufschiebbar. Die wirksame Kopplung des Koppelringes 26 und Mitnahmeringes 28 ist hier in Fig. 5 dargestellt, wobei Fig. 5 im Wesentlichen der schematischen Darstellung der Fig. 2 entspricht. Die Fig. 2 und 5 zeigen daher die Realisierung der ersten Gangstufe im Getriebe, hier im Übersetzungs- und Ausgleichsgetriebe 1.

Die Fig. 1 bis 6 zeigen daher das Übersetzungs- und Ausgleichsgetriebe 1 bzw. die Motor-und Getriebeeinheit mit einem Elektromotor 8 und einem koaxial an diesem angeflanschten Übersetzungs- und Ausgleichsgetriebe 1. Hierbei ist die Motorausgangswelle 11 des Elektromotors 8 mit der Eingangswelle 2 des Getriebes 1 verbunden und als Hohlwelle ausgebildet, wobei die Hohlwelle von einer der Ausgangswellen 3 des Getriebes koaxial durchsetzt wird.

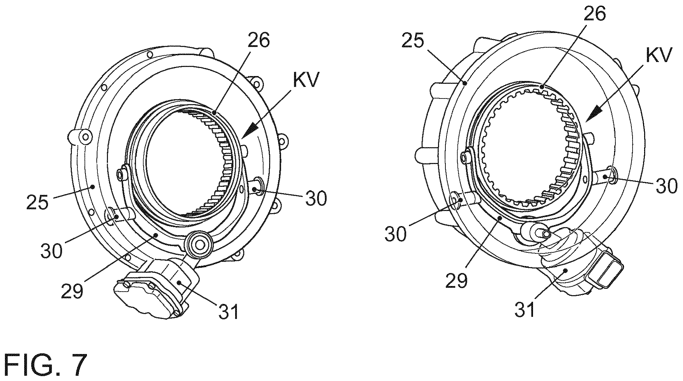

Fig. 7 zeigt schließlich in schematischer Darstellung die Realisierung bzw. Betätigung des Koppelringes 26, der auch als "Synchronring" bezeichenbar ist. Gut erkennbar in Fig. 7 ist der Koppelring 26 der entsprechend geführt wird durch eine Schaltgabel 29, die im Gehäuse 25 wiederum an zwei Lagerpunkten 30 schwenkbar gelagert ist und die Schaltgabel 29 selbst über einen Stellmotor 31 betätigbar ist. Über die Betätigung des Stellmotors 31 kann die Schaltgabel 29 entsprechend leicht verschwenkt werden, wodurch der Koppelring 26 axial entsprechend verschiebbar ist.

Mit dem hier erfindungsgemäß dargestellten Übersetzungs- und Ausgleichsgetriebe 1 können entscheidende Vorteile erzielt werden, die bereits eingangs teilweise erwähnt sind, hierauf darf nochmals verwiesen werden, zusätzlich darf aber nochmals folgendes ausgeführt werden:
Die dargestellte Kopplungsvorrichtung KV kann bauraumneutral in das Übersetzungs- und Ausgleichsgetriebe 1 integriert werden. Hierzu können gleiche Flanschlagen und/oder gleiche Anschlüsse sowie Lagerflächen verwendet werden, sowie auch bereits bestehende Verzahnungen der jeweiligen Wellen genutzt werden. Das Umschalten der Gangstufen von der ersten zur zweiten Gangstufe kann dann insbesondere auch lastfrei erfolgen, wobei die Relativdrehzahlen vom Elektromotor 8 synchronisiert werden. In der Neutralstellung der Kopplungsvorrichtung KV ist eine entsprechende Abkopplung des Getriebes vom Elektromotor 8 realisiert, dieses ist auch bei hohen Drehmomenten ermöglicht. Die Betätigung der Kopplungsvorrichtung KV, insbesondere des Koppelringes 26 wird über einen separaten Stellmotor 31 (mechanisch, elektrisch oder auch hydraulisch) entsprechend realisiert, wobei auch die Möglichkeit der manuellen Abkopplung zum Abschleppen des Fahrzeuges gegeben ist.

Dadurch, dass nun zwei Gangstufen im Übersetzungs- und Ausgleichsgetriebe 1 realisiert sind ergibt sich eine höhere Flexibilität des Gesamtgetriebes und bessere Einsatzmöglichkeiten, insbesondere führt die Realisierung der zweiten Gangstufe, nämlich die Kopplung des Hohlrades 19 der Eingangsstufe 6 mit dem Planetenträger 18a dieser Planetenstufe zur Realisierung der zweiten Gangstufe, wobei dann die Eingangsstufe 6 in diesem Fall "als Block" umläuft und für die gesamte Übersetzung im wesentlichen nur noch die Laststufe 7 verantwortlich ist.

### Bezugszeichenliste

- 1: Übersetzungs- und Ausgleichsgetriebe
- 2: Eingangswelle
- 3: Ausgangswelle
- 4: Ausgangswelle
- 5: Stirnraddifferential
- 6: Eingangsstufe
- 7: Laststufe
- 8: Elektromotor
- 9: Rad
- 10: Rad
- 11: Ausgangswelle des Elektromotors
- 12: Sonnenrad der Eingangsstufe
- 13: Hohlrad der Laststufe
- 14: Sonnenrad der Laststufe
- 15: Steg der Eingangsstufe
- 16: Planetenrad der Eingangsstufe
- 17: Planetenrad der Laststufe
- 18a: Planetenträger der Eingangsstufe
- 18b: Planetenträger der Laststufe
- 19: Hohlrad der Eingangsstufe
- 20: Steg der Laststufe
- 21: Planetenräder
- 22: Planetenräder
- 23: Parksperrenrad
- 24: Steg, Parksperrenwelle
- 25: Gehäuse
- 26: Koppelring
- 27: Koppelrad
- 28: Mitnahmering
- 29: Schaltgabel
- 30: Lagerpunkte
- 31: Stellmotor
- KV: Kopplungsvorrichtung

## Patentansprüche

1. Übersetzungs- und Ausgleichsgetriebe (1) mit einem Gehäuse (25), mit einer Eingangswelle (2) und zwei koaxial zu der Eingangswelle (2) angeordneten Ausgangswellen (3,4), wobei ein Übersetzungsabschnitt und ein als Stirnraddifferential (5) ausgebildeter Ausgleichsabschnitt vorgesehen sind, wobei der Übersetzungsabschnitt zwei Planetenstufen aufweist, nämlich eine Eingangsstufe (6) und eine Laststufe (7) aufweist, wobei das Sonnenrad (12) der Eingangsstufe (6) mit der Eingangswelle (2) wirksam verbunden ist, wobei die Laststufe (7) ein gehäusefestes Hohlrad (13) aufweist und deren Sonnenrad (14) über einen Steg (15) mit mindestens einem Planetenrad (16) der Eingangsstufe (6) wirksam verbindbar bzw. verbunden ist und wobei mindestens ein Planetenrad (17) der Laststufe (7) über einen Steg (20) wirksam mit einer Eingangswelle des Stirnraddifferentials (5) verbunden ist, **dadurch gekennzeichnet, dass** über eine entsprechend vorgesehene und/oder angeordnete Kopplungsvorrichtung (KV) das Hohlrad (19) der Eingangsstufe (6) wirksam und drehfest wahlweise mit einem Planetenträger (18a) des Planetenrades (16) der Eingangsstufe (6) oder mit einem Planetenträger (18b) des Planetenrades (17) der Laststufe (7) koppelbar bzw. entkoppelbar ist.

2. Übersetzungs- und Ausgleichsgetriebe nach Anspruch 1, **dadurch gekennzeichnet, dass** die Kopplungsvorrichtung (KV) so ausgebildet und/oder ausgeführt ist, dass die Kopplung bzw. Entkopplung der entsprechenden Elemente über vorgesehene Formschlusselemente realisiert wird, insbesondere daher eine formschlüssige Kopplung realisiert wird.

3. Übersetzungs- und Ausgleichsgetriebe nach einem der vorstehenden Ansprüche, **dadurch gekennzeichnet, dass** der Steg (24) (bzw. die Parksperrenwelle) des Planetenrades (16) der Eingangsstufe (6) mit einem Parksperrenstirnrad (23) verbunden ist, welches mit einer im Gehäuse (25) vorgesehenen Parksperrenvorrichtung in Eingriff steht.

4. Übersetzungs- und Ausgleichsgetriebe nach einem der vorstehenden Ansprüche, **dadurch gekennzeichnet, dass** die Kopplungsvorrichtung (KV) einen Koppelring (26), ein Koppelrad (27) und einen Mitnahmering (28) aufweist.

5. Übersetzungs- und Ausgleichsgetriebe nach einem der vorstehenden Ansprüche, **dadurch gekennzeichnet, dass** der Koppelring (26) axial auf dem Hohlrad (19) verschiebbar angeordnet ist und der Koppelring (26) und das Hohlrad (19) jeweils eine miteinander in Eingriff stehende Steckverzahnung aufweisen.

6. Übersetzungs- und Ausgleichsgetriebe nach einem der vorstehenden Ansprüche, **dadurch gekennzeichnet, dass** das Koppelrad (27) wirksam mit dem Planetenträger (18a) bzw. den Planetenträgern (18a) der Planetenräder (16) der Eingangsstufe (6) verbunden ist und dass an dem Außenumfang des Koppelrades (27) eine zu der Steckverzahnung des Koppelringes (26) korrespondierende Verzahnung vorgesehen ist.

7. Übersetzungs- und Ausgleichsgetriebe nach einem der vorstehenden Ansprüche, **dadurch gekennzeichnet, dass** zur wirksamen Kopplung der Koppelring (26) über das Koppelrad (27) verschiebbar ist.

8. Übersetzungs- und Ausgleichsgetriebe nach einem der vorstehenden Ansprüche, **dadurch gekennzeichnet, dass** der Mitnahmering (28) wirksam drehfest mit dem Planetenträger (18b) des Planetenrades (17) der Laststufe (7) verbunden oder mit dem Steg der Laststufe (7) verbunden und/oder hieran angeordnet und/oder befestigt ist und wobei der Mitnahmering (28) an einem Vorsprungsbereich eine Außenverzahnung aufweist.

9. Übersetzungs- und Ausgleichsgetriebe nach einem der vorstehenden Ansprüche, **dadurch gekennzeichnet, dass** zur wirksamen Kopplung der Koppelring (26) zumindest teilweise über den Mitnahmering (28) schiebbar ist.

10. Motor- und Getriebeeinheit mit einem Elektromotor und einem koaxial an diesem angeflanschten Übersetzungs- und Ausgleichsgetriebe (1) nach einem der vorstehenden Ansprüche, wobei eine Motorausgangswelle (11) des Elektromotors (8) mit der Eingangswelle (2) des Getriebes verbunden und als Hohlwelle ausgebildet ist, wobei die Hohlwelle von einer der Ausgangswellen (3) des Getriebes (1) koaxial durchsetzt wird.

## Claims

1. Speed-changing and differential transmission (1) having a housing (25), having an input shaft (2) and two output shafts (3, 4), arranged coaxially with the input shaft (2), wherein a speed-changing section and a differential section designed as a spur wheel differential (5) are provided, wherein the speed-changing section has two planetary stages, namely an input stage (6) and a load stage (7), wherein the sun wheel (12) of the input stage (6) is operatively connected to the input shaft (2), wherein the load stage (7) has an annulus (13) fixed in relation to the housing, and the sun wheel (14) of which load stage (7) can be or is operatively connected to at least one planet wheel (16) of the input stage (6) by means of a planet carrier (15) and wherein at least one planet wheel (17) of the load stage (7) is operatively connected to an input shaft of the spur wheel differential (5) by means of a planet carrier (20), **characterized in that**, by means of an appropriately provided and/or arranged coupling device (KV), the annulus (19) of the input stage (6) can be selectively operatively and conjointly rotationally coupled to and decoupled from a planet support (18a) of the planet wheel (16) of the input stage (6) or a planet support (18b) of the planet wheel (17) of the load stage (7).

2. Speed-changing and differential transmission according to Claim 1, **characterized in that** the coupling device (KV) is designed and/or embodied in such a way that the coupling or decoupling of the corresponding elements is achieved by means of positive engagement elements that are provided and, in particular, positive coupling is therefore achieved.

3. Speed-changing and differential transmission according to one of the preceding claims, **characterized in that** the planet carrier (24) (or the parking lock shaft) of the planet wheel (16) of the input stage (6) is connected to a parking lock spur wheel (23), which is in engagement with a parking lock device provided in the housing (25).

4. Speed-changing and differential transmission according to one of the preceding claims, **characterized in that** the coupling device (KV) has a coupling ring (26), a coupling wheel (27) and a driver ring (28).

5. Speed-changing and differential transmission according to one of the preceding claims, **characterized in that** the coupling ring (26) is arranged in such a way as to be movable axially on the annulus (19), and the coupling ring (26) and the annulus (19) each have an inter-engaging set of splines.

6. Speed-changing and differential transmission according to one of the preceding claims, **characterized in that** the coupling wheel (27) is operatively connected to the planet support (18a) or the planet supports (18a) of the planet wheels (16) of the input stage (6) and **in that** on the outer circumference of the coupling wheel (27) a set of teeth corresponding to the set of splines of the coupling ring (26) is provided.

7. Speed-changing and differential transmission according to one of the preceding claims, **characterized in that**, for the operative coupling, the coupling ring (26) can be moved over the coupling wheel (27).

8. Speed-changing and differential transmission according to one of the preceding claims, **characterized in that** the driver ring (28) is operatively connected conjointly rotationally to the planet support (18b) of the planet wheel (17) of the load stage (7) or is connected to the planet carrier of the load stage (7) and/or is arranged thereon and/or fastened thereto, and wherein the driver ring (28) has an external toothing on a projection region.

9. Speed-changing and differential transmission according to one of the preceding claims, **characterized in that**, for the operative coupling, the coupling ring (26) can be moved at least partially over the driver ring (28).

10. Motor and transmission unit having an electric motor and a speed-changing and differential transmission (1) according to one of the preceding claims flanged coaxially to said electric motor, wherein a motor output shaft (11) of the electric motor (8) is connected to the input shaft (2) of the transmission and is designed as a hollow shaft, wherein one of the output shafts (3) of the transmission (1) passes coaxially through the hollow shaft.

## Revendications

1. Transmission de démultiplication et différentielle (1) comprenant un boîtier (25), un arbre d'entrée (2) et deux arbres de sortie (3, 4) disposés coaxialement à l'arbre d'entrée (2), une portion de multiplication et une portion de différentiel réalisée sous forme de différentiel à pignons droits (5) étant prévues, la portion de multiplication présentant deux étages planétaires, à savoir un étage d'entrée (6) et un étage de charge (7), la roue solaire (12) de l'étage d'entrée (6) étant en liaison fonctionnelle avec l'arbre d'entrée (2), l'étage de charge (7) présentant une couronne dentée (13) fixée au boîtier et sa roue solaire (14) étant en liaison ou pouvant être en liaison fonctionnelle par le biais d'un porte-satellites (15) avec au moins un satellite (16) de l'étage d'entrée (6) et au moins un satellite (17) de l'étage de charge (7) étant en liaison fonctionnelle par le biais d'un porte-satellites (20) avec un arbre d'entrée du différentiel à pignons droits (5), **caractérisée en ce que** la couronne dentée (19) de l'étage d'entrée (6) peut être accouplée ou désaccouplée de manière fonctionnelle et solidaire en rotation, par le biais d'un dispositif d'accouplement (KV) prévu et/ou disposé de manière correspondante, de manière sélective avec un support planétaire (18a) du satellite (16) de l'étage d'entrée (6) ou avec un support planétaire (18b) du satellite (17) de l'étage de charge (7).

2. Transmission de démultiplication et différentielle selon la revendication 1, **caractérisée en ce que** le dispositif d'accouplement (KV) est formé et/ou réalisé de telle sorte que l'accouplement ou le désaccouplement des éléments correspondants soit réalisé par le biais d'éléments d'engagement par correspondance de formes prévus, en particulier de telle sorte qu'un accouplement par engagement par correspondance de formes soit ainsi réalisé.

3. Transmission de démultiplication et différentielle selon l'une quelconque des revendications précédentes, **caractérisée en ce que** le porte-satellites (24) (ou l'arbre de verrouillage de stationnement) du satellite (16) de l'étage d'entrée (6) est connecté à un pignon droit de verrouillage de stationnement (23) qui est en prise avec un dispositif de verrouillage de stationnement prévu dans le boîtier (25).

4. Transmission de démultiplication et différentielle selon l'une quelconque des revendications précédentes, **caractérisée en ce que** le dispositif d'accouplement (KV) présente une bague d'accouplement (26), une roue d'accouplement (27) et une bague d'entraînement (28).

5. Transmission de démultiplication et différentielle selon l'une quelconque des revendications précédentes, **caractérisée en ce que** la bague d'accouplement (26) est disposée de manière déplaçable axialement sur la couronne dentée (19), et la bague d'accouplement (26) et la couronne dentée (19) présentent chacune une denture d'enfichage en prise mutuelle.

6. Transmission de démultiplication et différentielle selon l'une quelconque des revendications précédentes, **caractérisée en ce que** la roue d'accouplement (27) est en liaison fonctionnelle avec le support planétaire (18a) ou les supports planétaires (18a) des satellites (16) de l'étage d'entrée (6) et **en ce qu'**une denture correspondant à la denture d'enfichage de la bague d'accouplement (26) est prévue au niveau de la périphérie extérieure de la roue d'accouplement (27).

7. Transmission de démultiplication et différentielle selon l'une quelconque des revendications précédentes, **caractérisée en ce que** pour l'accouplement fonctionnel, la bague d'accouplement (26) peut être déplacée par le biais de la roue d'accouplement (27).

8. Transmission de démultiplication et différentielle selon l'une quelconque des revendications précédentes, **caractérisée en ce que** la bague d'entraînement (28) est en liaison fonctionnelle solidaire en rotation avec le support planétaire (18b) du satellite (17) de l'étage de charge (7) ou est en liaison avec le porte-satellites de l'étage de charge (7) et/ou est disposée et/ou fixée sur celui-ci, et la bague d'entraînement (28) présentant une denture extérieure au niveau d'une région en saillie.

9. Transmission de démultiplication et différentielle selon l'une quelconque des revendications précédentes, **caractérisée en ce que** pour l'accouplement fonctionnel, la bague d'accouplement (26) peut être poussée au moins en partie par le biais de la bague d'entraînement (28).

10. Unité de moteur et de transmission comprenant un moteur électrique et une transmission de démultiplication et différentielle (1) raccordée par bridage coaxialement à celui-ci, selon l'une quelconque des revendications précédentes, un arbre de sortie de moteur (11) du moteur électrique (8) étant connecté à l'arbre d'entrée (2) de la transmission et étant réalisé sous forme d'arbre creux, l'arbre creux étant traversé coaxialement par l'un des arbres de sortie (3) de la transmission (1).
